# EUROPEAN PATENT SPECIFICATION

(11) **EP 0 405 926 B1**
(45) Date of publication and mention of the grant of the patent: **04.12.1996**
(21) Application number: 90306996.1
(22) Date of filing: 26.06.1990
(51) Int. Cl.: G06F 11/14, G06F 11/20, G06F 11/16

(54) **Method and apparatus for managing a shadow set of storage media**
Verfahren und Anordnung zur Steuerung von Schattenspeichern
Procédé et dispositif pour gérer un système de mémoire de recopie

(30) Priority: 30.06.1989 US 374528
(43) Date of publication of application: 02.01.1991
(73) Proprietor: DIGITAL EQUIPMENT CORPORATION, Maynard, Massachusetts 01754 (US)
(72) Inventor: Davis, Scott H., Merrimack, new Hampshire 03054 (US); Goleman, William L., Nashua, New Hampshire 03062 (US); Thiel, David W., Amherst, New Hampshire 03031 (US)
(74) Representative: Goodman, Christopher

(56) References cited:
- US-A- 4 686 620
- PATENT ABSTRACTS OF JAPAN vol. 9, no. 68 (P-344)(1791), 28 March 1985; & JP - A - 59201297 (NIPPON DENKI KK) 14.11.1984

## Description

### BACKGROUND OF THE INVENTION

This invention relates to a device for transferring digital data between two storage devices in a digital data processing system. The preferred embodiment is described in connection with a system for establishing and maintaining one or more duplicate or "shadow" copies of stored data to thereby improve the availability of the stored data.

A typical digital computer system includes one or more mass storage subsystems for storing data (which may include program instructions) to be processed. In typical mass storage subsystems, the data is actually stored on disks. Disks are divided into a plurality of tracks, at selected radial distances from the center, and sectors, defining particular angular regions across each track, with each track and set of one or more sectors comprising a block, in which data is stored.

Since stored data may be unintentionally corrupted or destroyed, systems have been developed that create multiple copies of stored data, usually on separate storage devices, so that if the data on one of the copies is damaged, it can be recovered from one or more of the remaining copies. Such multiple copies are known as a "shadow set." In a shadow set, typically data that is stored in particular blocks on one member of the shadow set is the same as data stored in corresponding blocks on the other members of the shadow set. It is usually desirable to permit multiple host processors to simultaneously access (i.e., in parallel) the shadow set for read and write type requests ("I/O" requests).

A new storage device or "new member" is occasionally added to the shadow set. For example, it may be desirable to increase the number of shadow set members to improve the data availability or it may be necessary to replace a shadow set member that was damaged. Because all shadow set members contain the same data, when adding a new member, all of the data stored on the active members is copied to the new member.

In Patent Abstracts of Japan, vol. 9, no. 68 (P-344)(1791), 28 March 1985, there is disclosed a system for shortening a fault search time, the system comprising a main storage device and at least two back-up memories enabling inspection of information between any two back-up memories or the main storage device and any one of the back-up memories.

In US-4686620 there is disclosed a method of generating a back-up copy of a database system, where modifications made to the database since the generation of a prior back-up copy are summarised in a bit map on a page basis. When the next back-up copy is made, only modified pages are transmitted and merged with the prior copy. Plural back-up passes are made, new modifications being allowed to occur on all but the last pass to allow the final generation of a consistent and complete back-up copy.

### Summary of the Invention

The invention generally features an apparatus and method for transferring data from a first storage medium to a second storage medium and is used in the preferred embodiment to copy data from an active member of a shadow set to a new shadow set member. The invention is defined in claims 1, 11 and 12. As described in a preferred embodiment, the first storage medium is available to one or more hosts for I/O operations, and each of the storage media are divided into corresponding data blocks, the method generally including the steps of: (a) reading data stored in a first data block in the first storage medium, the first data block initially constituting a current data block; (b) comparing data read in the current data block to data stored in a corresponding data block in the second storage medium; (c) if the data compared in step b are identical, reading data stored in a different data block in the first storage medium, the different data block becoming the current data block, and returning to step b; (d) if the data compared in step b are not identical, transferring the data stored in the current data block to a corresponding data block in the second storage medium; and (e) rereading the data in the current data block and returning to step b.

In the preferred embodiment, the different data block is a data block adjacent to the current data block. Each data block in the first storage medium is compared to a corresponding data block in the second storage medium. Each of the storage media may be directly accessed by one or more host processors. The storage media may be disk storage devices.

The invention allows data to be copied from one storage media to a second storage media without interrupting I/O operations from one or more hosts to the shadow set. Therefore a shadowing system can be maintained that provides maximum availability to data with no interruption to routine I/O operations while providing consistent and correct results.

Other advantages and features of the invention will be apparent from the following detailed description of the invention and the appended claims.

### Description of the Preferred Embodiments Drawings

We first briefly describe the drawings.

Fig. 1 is a shadow set storage system according to the present invention.

Figs. 2-4 are data structures used with the invention.

Fig. 5 is a flow chart illustrating the method employed by the invention.

### Structure and Operation

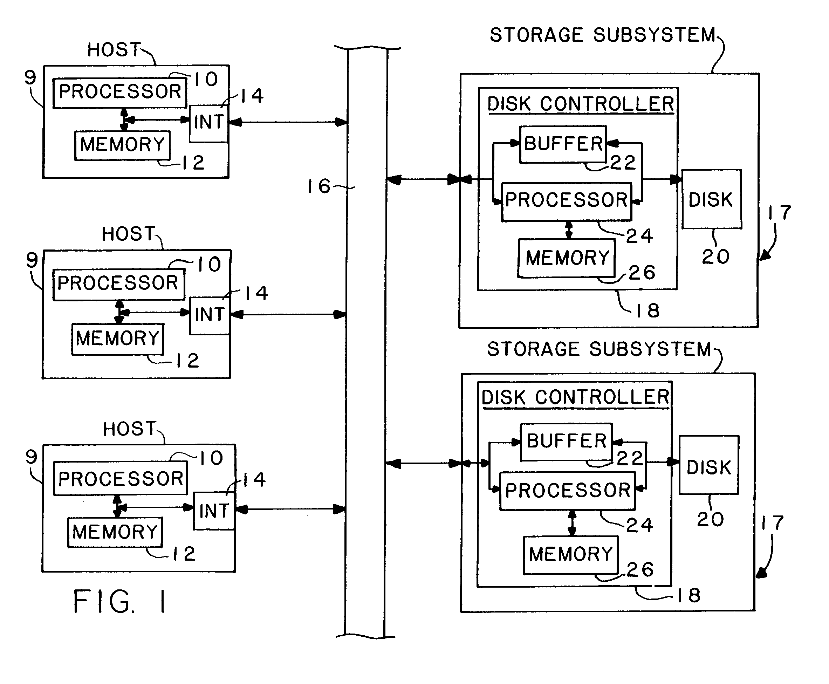

Referring to Fig. 1, a shadowing system utilizing the invention includes a plurality of hosts 9, each of which includes a processor 10, memory 12 (including buffer storage) and a communications interface 14. The hosts 9 are each directly connected through a communications medium 16 (e.g., by a virtual circuit) to two or more storage subsystems illustrated generally at 17 (two are shown).

Each storage subsystem includes a disk controller 18, that controls I/O requests to one or more disks 20, which form the members of the shadow set. Disk controller 18 includes a buffer 22, a processor 24 and memory 26 (e.g., volatile memory). Processor 24 receives I/O requests from host 9 and controls reads from and writes to disk 20. Buffer 22 temporarily stores data received in connection with a write command before the data are written to disk 20. Buffer 22 also stores data read from a disk 20 before the data are transmitted to host 9 in response to a read command. Processor 24 stores various types of information in memory 26.

Each host 9 will store, in its memory 12, a table that includes information about the system that the hosts 9 need to perform many operations. For example, hosts 9 will perform read and write operations to storage subsystems 17 and must know which storage subsystems are available for use, what disks are stored in the subsystems, etc. As will be described in greater detail below, the hosts 9 will slightly alter the procedure for read and write operations if data is being transferred from one shadow set member to another. Therefore, the table will store status information regarding any ongoing operations. The table also contains other standard information.

While each storage subsystem may include multiple disks 20, the shadow set members are chosen to be disks in different storage subsystems. Therefore, hosts do not access two shadow set members through the same disk controller. This will avoid a "central point of failure." In other words, if the shadow set members have a common or central controller, and that controller malfunctions, the hosts will not be able to successfully perform any I/O operations. In the preferred system, however, the shadow set members are "distributed", and the failure of one device (e.g., one disk controller 18) will not inhibit I/O operations because they can be performed using another shadow set member accessed through another disk controller.

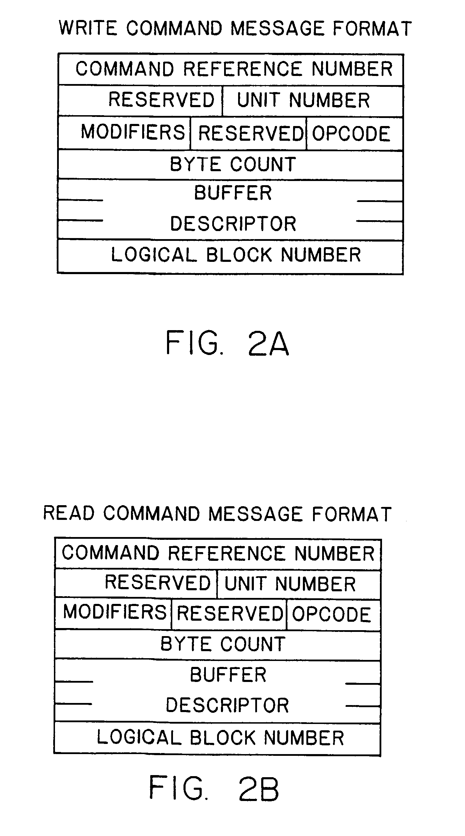

When a host wishes to write data to the shadow set, the host issues a command whose format is illustrated in Fig. 2A. The command includes a "command reference number" field that uniquely identifies the command, and a "unit number" field that identifies the unit (e.g. the disk 20) to which data is to be written. The host issues a separate write command for each disk that makes up the shadow set, using the proper unit number. The opcode field identifies that the operation is a write. The "byte count" field gives the total number of bytes contained in the data to be written and the "logical block number" identifies the starting location on the disk. The "buffer descriptor" identifies the location in host memory 12 that contains the data to be written.

The format of a read command is illustrated in Fig. 2B, and includes fields that are similar to the write command fields. For a read command, the buffer descriptor contains the location in host memory 12 to which the data read from the disk is to be stored.

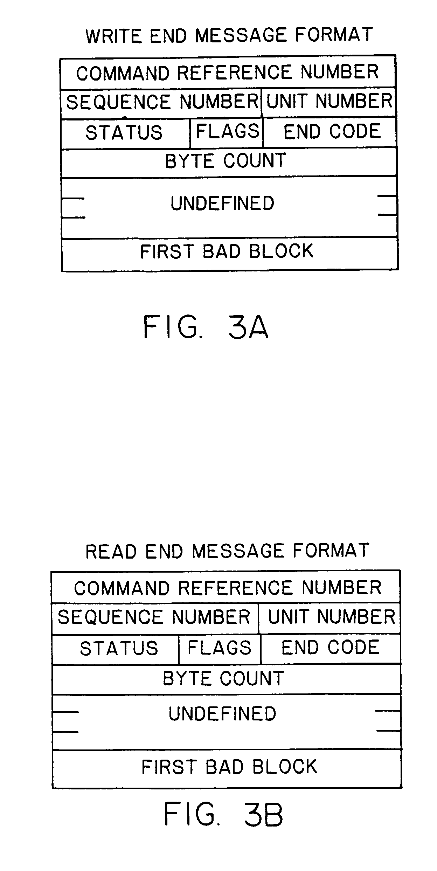

Once a host transmits a read or write command, it is received by the disk controller 18 that serves the disk identified in the "unit number" field. For a write command, the disk controller will implement the write to its disk 20 and return an "end message" to the originating host, the format of the write command end message being illustrated in Fig. 3A. The end message includes a status field that informs the host whether or not the command was completed successfully. If the write failed the status field can include error information, depending on the nature of the failure. The "first bad block" field indicates the address of a first block on the disk that is damaged (if any).

For a read command, the disk controller will read the requested data from its disk and transmit the data to memory 12 of the originating host. An end message is also generated by the disk controller after a read command and sent to the originating host, the format of the read command end message being illustrated in Fig. 3B. The read command end message is similar to the end message for the write command.

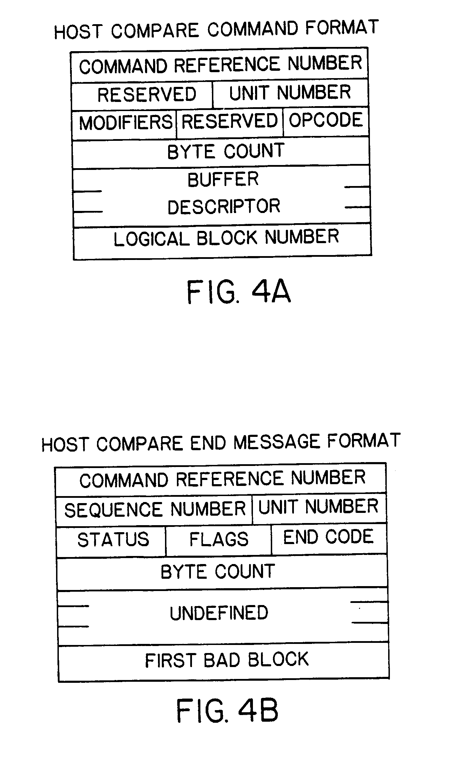

As will be explained below, the system utilizes a "Compare Host" operation when transferring data between two shadow set members. The command message format for the Compare Host operation is shown in Fig. 4A. The Compare Host operation instructs the disk controller supporting the disk identified in the "unit number" field to compare the data stored in a section of host memory identified in the "buffer descriptor" field, to the data stored on the disk in the location identified by the "logical block number" and "byte count" fields.

The disk controller receiving the Compare Host command will execute the requested operation by reading the identified data from host memory, reading the data from the identified section of the disk, and comparing the data read from the host to the data read from the disk. The disk controller then issues an end message, the format of which is shown in Fig. 4B, to the host that issued the Compare Host command. The status field of the end message will indicate whether the compared data was found to be identical.

When adding a new member to the shadow set (i.e., a new disk 20), the system chooses a host processor to carry out the processing necessary to provide the new member with all of the data stored in the active members of the shadow set. The host will choose one active member to function as a "source" and will sequentially copy all of the data from the source that differs from data in the new member, to the new member or "target." Using the method of the invention, data is transferred to the new member without interrupting normal I/O operations between other hosts and the shadow set, while assuring that any changes to dat.a in the shadow set made during the copy operation will propagate to the new member.

Specifically, the method of transferring data to a new member or target from a source involves sequentially reading data blocks, a "cluster" at a time (a cluster is a predetermined number of data blocks), from the source and comparing the read data to data stored at corresponding locations in the target. If the data is identical in the two corresponding clusters, then the next cluster is processed. Otherwise, the data read from the source is written to the target, and the host performs a similar comparison operation on the same cluster once again. The second comparison on the same cluster of data is necessary because the shadow set is available for I/O operations to other hosts during the process of adding a new member. In other words, while the new member is being added, I/O operations such as write operations from hosts in the system will continue to the shadow set. Read commands are performed to any active member, but not to the target since not all of the target's data is identical to the shadow set data. Since it is possible for a write operation to occur after the system reads data from the source and before it writes the data to the target, it is possible that obsolete data will be written into the target. I.e., if the data in the shadow set is updated just before the host writes data to the target, the data written to the target will be obsolete.

Therefore, the system will perform a second compare operation after it writes data to the target, to the same two corresponding data clusters. In this way, if the source has been updated, and the target was inadvertently written with obsolete data, the second comparison will detect the difference and the write operation will be repeated to provide the updated data to the target. Only after the two clusters are found to have identical data does the process move to the next data cluster.

It is theoretically possible for the same cluster to be compared and written many times. For example, if there was a particularly oft-written file or data block that was being changed constantly, the source data cluster and target data cluster would always be inconsistent. To prevent the system from repeating the comparison and writing steps in an infinite loop, a "repeat cluster counter" is used to determine how many times the loop has been executed.

This counter is initialized to zero and is incremented after data is written from the source to the target. The counter is monitored to determine if it reaches a predetermined threshold number. The counter is reset when the system moves on to a new cluster. Therefore, if the same cluster is continually compared and written to the target, the counter will eventually reach the threshold value. The system will then reduce the size of the cluster and perform the comparison again. Reducing the size of the cluster will make it more likely that the clusters on the two members will be consistent since data in a smaller size cluster is less likely to be changed by a write from one of the hosts. When a successful comparison is eventually achieved, the cluster size is restored to its previous value.

As described above, I/O operations to the shadow set will continue while a new member is being added. However, hosts are required to perform write type operations in a manner that guarantees that while a new member is being added, all data written to logical blocks on the target disk will be identical to those contained on the source disk. If hosts issue I/O commands in parallel, as is normally done, it is possible that the data on the source and target will not be consistent after the copy method described above is implemented. To avoid possible data corruption, hosts shall ensure that write operations addressed to the source disk are issued and completed before the equivalent operation is issued to the target disk.

As explained above, each host stores a table that lists data that the host needs to operate properly in the system. For example, each table will include information regarding the disks that make up the shadow set, etc. The table also stores status information that informs the host whether or not a new member is being added to the shadow set. Therefore, before a host executes an I/O request to the shadow set it will check the status field in its table, and if the host determines that a new member is being added, the host will implement the special procedures discussed above for avoiding possible data corruption. The table is kept current by requiring hosts that begin the process of adding a new member, to send a message to every other host in the system, informing each host of the operation. A host that is controlling the addition of the new member will not begin the data transfer to the new member until it receives a confirmation from each host that each host has updated its table to reflect the new status of the system. Similarly, a host controlling the addition of a new member will send a message to each host when the new member has been added, and has data that is consistent with the shadow set. Upon receiving this message, hosts will resume the normal practice of issuing I/O requests in parallel.

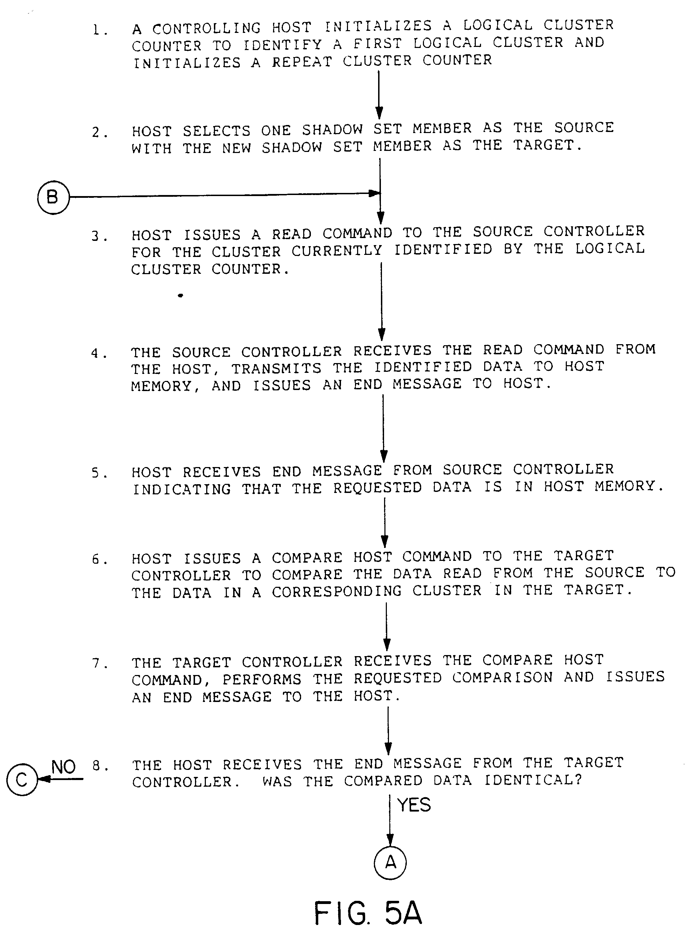

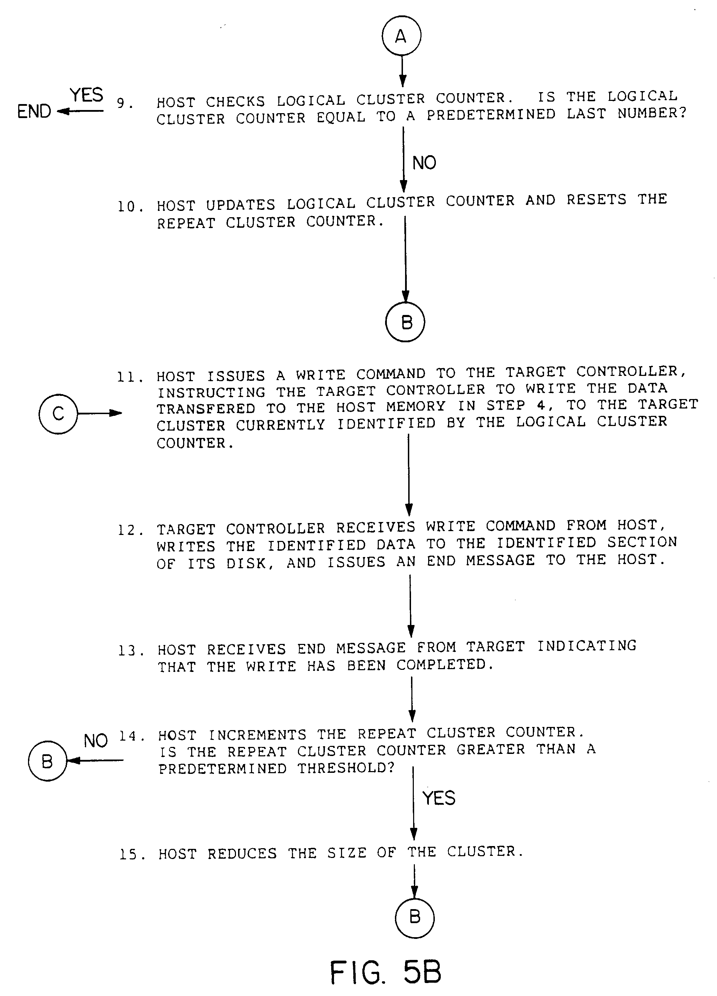

The method of the invention will now be explained in detail, with reference to the flow chart of Fig. 5. The host first initializes two counters: a "logical cluster counter" and the repeat cluster counter (step 1). The logical cluster counter is used to identify clusters in each shadow set member and, when initialized, will identify a first cluster of data. As the logical cluster counter is incremented, it sequentially identifies each cluster in the shadow set.

Next, the host selects one active shadow set member to serve as the source with the new member serving as the target (step 2). The host then issues a read command of the type illustrated in Fig. 2B to the disk controller serving the source (identified by the "unit number" field in the command) requesting that the data in the cluster identified by the logical cluster counter be read and transmitted to host memory (step 3).

The disk controller serving the source will receive the read command, will read the identified data from the source to its buffer 22 and will transmit the data to host memory 12, as well as issuing an end message (see Fig. 2B) informing the host that the read command was executed (step 4).

After the host receives the end message indicating that the data from the source is in host memory 12 (step 5), the host will issue a Compare Host command to the target to compare the data read from the source to the data stored in the same logical cluster in the target (step 6).

The target will receive the Compare Host command, and will perform the comparison, issuing an end message (see Fig. 4B) to the host indicating the result of the comparison (step 7).

The host receives the end message in step 8 and determines whether the data compared by the Compare Host command was identical. If the compared data was identical, then the logical cluster counter is tested to see if it is equal to a predetermined last number (indicating that all data clusters have been processed) (step 9). If the logical cluster counter is equal to the last number, then the process is finished. Otherwise, the logical cluster counter is incremented, the repeat cluster counter is reset (step 10), and the method returns to step 3 to begin processing the next cluster.

If the compared data was not identical (see step 8), the host issues a write command of the type shown in Fig. 2A, to the target's disk controller, instructing the controller to write the data read from the source and sent to the host in step 4 to the section of the target identified by the logical cluster counter (i.e., the cluster in the target that corresponds to the cluster in the source from which the data was read) (step 11).

The disk controller serving the target receives the write command, reads the data from host memory and writes it to the section of the target identified by the current logical cluster counter and issues an end message to the host (step 12).

The host receives the end message indicating that the write has been completed (step 13), increments the repeat cluster counter and determines if the repeat cluster counter is greater than a threshold value (step 14). As explained above, if the same cluster is written a predetermined number of times, the repeat cluster counter will reach a certain value and the size of the cluster is reduced (step 15).

The system then returns to step 3 without updating the logical cluster counter. Since the logical cluster counter is not updated, the host will then read the same cluster once again from the source and perform the host compare operation to the target for the same cluster.

The above described embodiment is a preferred illustrative embodiment only and there are various modifications that may be made within the spirit of the invention. For example, the method may be modified such that, if a new disk being added to the shadow set is known to have little or no data that is consistent with data on the active members of the shadow set, steps 6-10 can be eliminated the first time that each cluster is processed such that no Compare Host operation is performed. In other words, if the new disk is known to contain data that is different than the data stored in the shadow set, the result of the first Compare Host operation will be negative and need not be performed. However, if the new disk being added was one that was in the shadow set in the recent past, then most of its data will be consistent with the data in the shadow set, and the Compare Host operation should be performed the first time.

Therefore, the invention shall be limited only by the scope of the appended claims.

## Claims

1. A method of managing a shadow set of storage media including a first storage medium (20) and a second storage medium (20), at least said first storage medium being accessible by one or more host processors (10) for routine I/O operations that include writing data to said first storage medium, each of said storage media including data blocks with at least some data blocks of said first storage medium having corresponding data blocks in said second storage medium, said method comprising the steps of:
(a) reading data stored in a first data block in said first storage medium (20), the first data block initially constituting a current data block;
(b) comparing the data read in said current data block to data stored in a corresponding data block in said second storage medium (20);
(c) if the data compared in step b are identical, reading data stored in another data block in said first storage medium, said another data block becoming the current data block, and returning to step b;
(d) if the data compared in step b are not identical, modifying the data stored in one of said storage media by transferring data from said first storage storage medium to said second storage medium to cause the data in said current data block and the data in said corresponding data block in said second storage medium to be identical while maintaining access to said first storage medium for said routine I/O operations by said one or more of said host processors; and
(e) rereading the data in said current data block and returning to step b.

2. The method of claim 1 wherein said step of modifying comprises modifying the data in said second storage medium (20).

3. The method of claim 2 wherein said step of modifying comprises writing said data read from the current data block in said first storage medium (20) to the corresponding data block in said second storage medium (20).

4. The method of claim 1 wherein said another data block is a data block adjacent to said current data block.

5. The method of claim 1 wherein each data block in said first storage medium (20) is compared to a corresponding data block in said second storage medium (20).

6. The method of claim 5 wherein each of said storage media (20) may be directly accessed by a host processor (10).

7. The method of claim 5 wherein each of said storage media (20) may be directly accessed by each of said one or more host processors (10).

8. The method of claim 1 wherein said storage media are disk storage devices (20).

9. The method of claim 1 wherein each of said host processors (10) will transmit any write requests to said storage media (20) first to said first storage medium and, after said write request to said first storage medium has completed, will transmit said write request to said second storage medium.

10. The method of claim 1 wherein each of said host processors (10) maintains a table including information that enables said host processor to determine if said data transfers are occurring between said storage media (20).

11. A method of managing a shadow set of storage media (20), wherein said shadow set of storage media includes at least a first storage medium (20) and a second storage medium (20), each of said shadow set of storage media being accessible by one or more host processors (10) for said routine I/O operations that include writing data thereto, each one of said storage media having storage locations at least some of which correspond to storage locations of another one of said storage media, the method comprising the steps of:
A. carrying out successive comparisons of data stored in said corresponding locations of said first and second storage media ; and
B. performing a management operation, said management operation comprising, for each of said corresponding locations where said comparisons indicated that the data in said corresponding locations were not identical;
(i) reading data from locations in said first storage medium and writing said data to said corresponding locations of said second storage medium while maintaining access to at least said first one of said storage media for said routine I/O operations by said one or more of said host processors;
(ii) comparing the data in said corresponding locations after said writing in said step (i) to determine if the data in said corresponding locations are identical; and
(iii) repeating step (i) if the comparison of step (ii) indicates that the data in said corresponding locations are not identical, otherwise terminating said management operation as to said storage locations.

12. An apparatus for managing a shadow set of storage media (20) including a first storage medium (20) and a second storage medium (20), at least said first storage medium being accessible by one or more host processors (10) for routine I/O operations that include writing data thereto, each one of said storage media having storage locations at least some of which correspond to storage locations of another one of said storage media, comprising:
first means (24,10) for carrying out successive comparisons of data stored in said corresponding locations of said first and second storage media ; and
second means (10,24), responsive to said comparisons, for performing a management operation for each of said corresponding locations where said comparisons by said first means indicated that the data in said corresponding locations were not identical, wherein to perform said management operation said second means comprises;
a. third means for reading data from locations in said first storage medium and writing said data to said corresponding locations in said second storage medium while maintaining access to at least said first storage medium for said routine I/O operations by said one or more of said host processors;
b. fourth means for comparing the data in said corresponding locations after said writing by said third means to determine if the data in said corresponding locations are identical; and
c. fifth means for returning operation to third means if the fourth means indicates that the data in said corresponding locations are not identical, otherwise terminating said management operation as to said storage locations.

13. The apparatus of claim 12 wherein each of said host processors will transmit any write requests to said storage media first to said one of said storage media and, after said write request to said one of said storage media has completed, will transmit said write request to said another of said storage media.

14. The apparatus of claim 12 wherein each of said host processors maintains a table including information that enables said host processor to determine whether said management operation is being performed on one or more of said storage media in said shadow set.

15. The apparatus of claim 12 wherein each of said storage media may be directly accessed by each of a plurality of host processors.

16. The apparatus of claim 12 wherein said means for performing said management operation repeats said reading and comparing recursively for the same corresponding locations until the data stored in said corresponding locations is determined to be identical.

## Patentansprüche

1. Verfahren für das Management eines Schattensatzes aus Speichermedien, der ein erstes Speichermedium (20) und ein zweites Speichermedium (20) enthält, wobei wenigstens auf das erste Speichermedium durch einen oder mehrere Hostprozessoren (10) für Routine-E/A-Operationen, die das Schreiben von Daten in das erste Speichermedium umfassen, zugegriffen werden kann, wobei jedes der Speichermedien Datenblöcke enthält, wobei wenigstens einige Datenblöcke des ersten Speichermediums entsprechende Datenblöcke im zweiten Speichermedium besitzen, wobei das Verfahren die folgenden Schritte enthält:
(a) Lesen von Daten, die in einem ersten Datenblock im ersten Speichermedium (20) gespeichert sind, wobei der erste Datenblock anfangs einen momentanen Datenblock bildet;
(b) Vergleichen der im momentanen Datenblock gelesenen Daten mit den in einem entsprechenden Datenblock im zweiten Speichermedium (20) gespeicherten Daten;
(c) Lesen von in einem weiteren Datenblock im ersten Speichermedium gespeicherten Daten, wobei der weitere Datenblock der momentane Datenblock wird, und Zurückkehren zum Schritt b, falls die im Schritt b verglichenen Daten übereinstimmen;
(d) Modifizieren der in einem der Speichermedien gespeicherten Daten durch Übertragen von Daten vom ersten Speichermedium an das zweite Speichermedium, falls die im Schritt b verglichenen Daten nicht übereinstimmen, um zu bewirken, daß die Daten im momentanen Datenblock und die Daten im entsprechenden Datenblock des zweiten Speichermediums übereinstimmen, wobei der Zugriff auf das erste Speichermedium für die Routine-E/A-Operationen durch einen oder mehrere der Hostprozessoren aufrechterhalten wird; und
(e) erneutes Lesen der Daten im momentanen Datenblock und Zurückkehren zum Schritt b.

2. Verfahren nach Anspruch 1, in dem der Schritt des Modifizierens das Modifizieren der Daten im zweiten Speichermedium (20) umfaßt.

3. Verfahren nach Anspruch 2, in dem der Schritt des Modifizierens das Schreiben der aus dem momentanen Datenblock im ersten Speichermedium (20) gelesenen Daten in den entsprechenden Datenblock im zweiten Speichermedium (20) enthält.

4. Verfahren nach Anspruch 1, in dem der weitere Datenblock ein an den momentanen Datenblock angrenzender Datenblock ist.

5. Verfahren nach Anspruch 1, in dem jeder Datenblock im ersten Speichermedium (20) mit einem entsprechenden Datenblock im zweiten Speichermedium (20) verglichen wird.

6. Verfahren nach Anspruch 5, in dem auf jedes der Speichermedien (20) durch einen Hostprozessor (10) direkt zugegriffen werden kann.

7. Verfahren nach Anspruch 5, in dem auf jedes der Speichermedien (20) durch jeden des einen oder der mehreren Hostprozessoren (10) direkt zugegriffen werden kann.

8. Verfahren nach Anspruch 1, in dem die Speichermedien Plattenspeichervorrichtungen (20) sind.

9. Verfahren nach Anspruch 1, in dem jeder der Hostprozessoren (10) irgendwelche Schreibanforderungen an die Speichermedien (20) zunächst an das erste Speichermedium und dann, wenn die Schreibanforderung an das erste Speichermedium abgeschlossen worden ist, die Schreibanforderung an das zweite Speichermedium überträgt.

10. Verfahren nach Anspruch 1, in dem jeder der Hostprozessoren (10) eine Tabelle hält, die Informationen enthält, die den Hostprozessor in die Lage versetzt zu bestimmen, ob die Datenübertragungen zwischen den Speichermedien (20) erfolgen.

11. Verfahren für das Management eines Schattensatzes aus Speichermedien (20), in dem der Schattensatz aus Speichermedien wenigstens ein erstes Speichermedium (20) und ein zweites Speichermedium (20) enthält, wobei auf jedes Element der Schattensatz aus Speichermedien durch einen oder mehrere Hostprozessoren (10) für Routine-E/A-Operationen, die das Schreiben von Daten in das Element enthalten, zugegriffen werden kann, wobei jedes der Speichermedien Speicherplätze besitzt, wovon wenigstens einige Speicherplätzen eines weiteren der Speichermedien entsprechen, wobei das Verfahren die folgenden Schritte enthält:
A. Ausführen von sukzessiven Vergleichen von an entsprechenden Plätzen des ersten und des zweiten Speichermediums gespeicherten Daten; und
B. Ausführen einer Managementoperation, wobei die Managementoperation für jeden der entsprechenden Plätze, an denen die Vergleiche ergeben haben, daß die Daten an den entsprechenden Plätzen nicht übereinstimmen, enthält:
(i) Lesen von Daten aus den Plätzen im ersten Speichermedium und Schreiben der Daten an die entsprechenden Plätze des zweiten Speichermediums, wobei der Zugriff auf wenigstens das eine der Speichermedien für die Routine-E/A-Operationen durch den einen oder die mehreren der Hostprozessoren aufrechterhalten wird;
(ii) Vergleichen der Daten an den entsprechenden Plätzen nach dem Schreiben im Schritt (i), um festzustellen, ob die Daten an den entsprechenden Plätzen übereinstimmen; und
(iii) Wiederholen des Schrittes (i), falls der Vergleich des Schrittes (ii) ergibt, daß die Daten an den entsprechenden Plätzen nicht übereinstimmen, andernfalls Beenden der Managementoperation bezüglich der Speicherplätze.

12. Vorrichtung für das Management eines Schattensatzes aus Speichermedien (20), der ein erstes Speichermedium (20) und ein zweites Speichermedium (20) enthält, wobei wenigstens auf das erste Speichermedium durch einen oder mehrere Hostprozessoren (10) für Routine-E/A-Operationen, die das Schreiben von Daten in das Medium enthalten, zugegriffen werden kann, wobei jedes der Speichermedien Speicherplätze besitzt, wovon wenigstens einige Speicherplätzen eines weiteren der Speichermedien entsprechen, mit:
einer ersten Einrichtung (24, 10) zum Ausführen von sukzessiven Vergleichen von an den entsprechenden Plätzen des ersten und des zweiten Speichermediums gespeicherten Daten; und
einer zweiten Einrichtung (10, 24), die als Antwort auf die Vergleiche eine Managementoperation für jeden der entsprechenden Speicherplätze ausführt, für die die Vergleiche durch die erste Einrichtung ergeben haben, daß die Daten an den entsprechenden Plätzen nicht übereinstimmen, wobei die zweite Einrichtung für die Ausführung der Managementoperation enthält:
a. eine dritte Einrichtung zum Lesen von Daten aus den Plätzen im ersten Speichermedium und zum Schreiben der Daten an die entsprechenden Plätze im zweiten Speichermedium, wobei der Zugriff wenigstens auf das erste Speichermedium für die Routine-E/A-Operationen durch den einen oder die mehreren der Hostprozessoren aufrechterhalten wird;
b. eine vierte Einrichtung zum Vergleichen der Daten an den entsprechenden Plätzen nach dem Schreiben durch die dritte Einrichtung, um festzustellen, ob die Daten an den entsprechenden Plätzen übereinstimmen; und
c. eine fünfte Einrichtung, die die Operation zur dritten Einrichtung zurückgibt, falls die vierte Einrichtung angibt, daß die Daten an den entsprechenden Plätzen nicht übereinstimmen, und andernfalls die Managementoperation bezüglich der Speicherplätze beendet.

13. Vorrichtung nach Anspruch 12, in der jeder der Hostprozessoren irgendwelche Schreibanforderungen an die Speichermedien zunächst an das eine der Speichermedien und dann, wenn die Schreibanforderung an das eine der Speichermedien abgeschlossen worden ist, die Schreibanforderung an das weitere der Speichermedien überträgt.

14. Vorrichtung nach Anspruch 12, in dem jeder der Hostprozessoren eine Tabelle hält, die Informationen enthält, die dem Hostprozessor ermöglichen zu bestimmen, ob die Managementoperation für eines oder mehrere der Speichermedien in der Schattenmenge ausgeführt wird.

15. Vorrichtung nach Anspruch 12, in der auf jedes der Speichermedien durch jeden von mehreren Hostprozessoren direkt zugegriffen werden kann.

16. Vorrichtung nach Anspruch 12, in der die Einrichtung zum Ausführen der Managementoperation das Lesen und Vergleichen rekursiv für dieselben entsprechenden Plätze solange wiederholt, bis für die an den entsprechenden Plätzen gespeicherten Daten festgestellt wird, daß sie übereinstimmen.

## Revendications

1. Méthode de gestion d'un double jeu de supports de mémorisation comprenant un premier support de mémorisation (20) et un second support de mémorisation (20), ledit premier support de mémorisation au moins étant accessible par un ou plusieurs processeurs centraux (10) pour permettre des opérations d'entrée/sortie de routine comprenant l'inscription de données sur ledit premier support de mémorisation, chacun desdits supports de mémorisation comprenant des blocs de données, certains au moins des blocs de données dudit premier support de mémorisation ayant des blocs de données correspondants sur ledit second support de mémorisation, ladite méthode comprenant les étapes qui consistent à :
(a) lire les données mémorisées dans un premier bloc de données dudit premier support de mémorisation (20), le premier bloc de données constituant initialement un bloc de données en cours;
(b) comparer les données lues dans ledit bloc de données en cours avec des données mémorisées dans un bloc de données correspondant dudit second support de mémorisation (20);
(c) si les données comparées au cours de l'étape b sont identiques, lire les données mémorisées dans un autre bloc de données dudit premier support de mémorisation, ledit autre bloc de données devenant le bloc de données en cours, et revenir à l'étape b;
(d) si les données comparées au cours de l'étape b ne sont pas identiques, modifier les données mémorisées dans l'un desdits supports de mémorisation en transférant des données dudit premier support de mémorisation audit second support de mémorisation pour faire en sorte que les données contenues dans ledit bloc de données en cours et les données contenues dans ledit bloc de données correspondant dudit second support de mémorisation soient identiques, tout en maintenant un accès audit premier support de mémorisation pour permettre l'exécution desdites opérations d'entrée/sortie de routine par le ou les processeurs centraux; et
(e) relire les données contenues dans ledit bloc de données en cours et revenir à l'étape b.

2. Méthode selon la revendication 1, suivant laquelle ladite étape de modification comprend la modification des données dudit second support de mémorisation (20).

3. Méthode selon la revendication 2, suivant laquelle ladite étape de modification comprend l'inscription desdites données lues à partir du bloc de données en cours dudit premier support de mémorisation (20) dans le bloc de données correspondant dudit second support de mémorisation (20).

4. Méthode selon la revendication 1, suivant laquelle ledit autre bloc de données est un bloc de données adjacent audit bloc de données en cours.

5. Méthode selon la revendication 1, suivant laquelle chaque bloc de données dudit premier support de mémorisation (20) est comparé à un bloc de données correspondant dudit second support de mémorisation (20).

6. Méthode selon la revendication 5, suivant laquelle un processeur central (10) peut accéder directement à chacun desdits supports de mémorisation (20).

7. Méthode selon la revendication 5, suivant laquelle chaque processeur central (10) peut accéder directement à chacun desdits supports de mémorisation (20).

8. Méthode selon la revendication 1, suivant laquelle lesdits supports de mémorisation sont des dispositifs de mémoire à disque (20).

9. Méthode selon la revendication 1, suivant laquelle chacun desdits processeurs centraux (10) va transmettre toutes les demandes d'écriture destinées auxdits supports de mémorisation (20), d'abord audit premier support de mémorisation, puis, une fois terminée ladite demande d'écriture dans ledit premier support de mémorisation, audit second support de mémorisation.

10. Méthode selon la revendication 1, suivant laquelle chacun desdits processeurs centraux (10) conserve une table contenant des informations lui permettant de déterminer si lesdits transferts de données ont lieu entre lesdits supports de mémorisation (20).

11. Méthode de gestion d'un double jeu de supports de mémorisation (20), suivant laquelle ledit double jeu de supports de mémorisation comprend au moins un premier support de mémorisation (20) et un second support de mémorisation (20), chaque double jeu de supports de mémorisation étant accessible par un ou plusieurs processeurs centraux (10) pour permettre lesdites opérations d'entrée/sortie de routine qui comprennent l'inscription de données dans lesdits supports de mémorisation, chacun desdits supports de mémorisation comportant des emplacements de mémorisation dont certains au moins correspondent à des emplacements de mémorisation d'un autre support de mémorisation, la méthode comprenant les étapes qui consistent à :
A. effectuer des comparaisons successives des données mémorisées dans lesdits emplacements correspondants desdits premier et second supports de mémorisation; et
B. exécuter une opération de gestion qui comprend pour chacun desdits emplacements correspondants où lesdites comparaisons ont indiqué que les données contenues dans lesdits emplacements correspondants ne sont pas identiques :
(i) la lecture des données à partir des emplacements dudit premier support de mémorisation et l'inscription desdites données dans lesdits emplacements correspondants dudit second support de mémorisation tout en maintenant un accès au moins audit premier support de mémorisation pour permettre l'exécution desdites opérations d'entrée/sortie de routine par le ou les processeurs centraux;
(ii) la comparaison des données contenues dans lesdits emplacements correspondants après ladite inscription de ladite étape (i) pour déterminer si les données contenues dans lesdits emplacements correspondants sont identiques; et
(iii) la répétition de l'étape (i) si la comparaison de l'étape (ii) indique que les données contenues dans lesdits emplacements correspondants ne sont pas identiques, sinon, la fin de ladite opération de gestion en ce qui concerne lesdits emplacements de mémorisation.

12. Appareil pour gérer un double jeu de supports de mémorisation (20) comprenant un premier support de mémorisation (20) et un second support de mémorisation (20), ledit premier support de mémorisation au moins étant accessible par un ou plusieurs processeurs centraux (10) pour permettre des opérations d'entrée/sortie de routine comprenant l'inscription de données dans ledit premier support de mémorisation, chacun desdits supports de mémorisation comportant des emplacements de mémorisation dont certains au moins correspondent à des emplacements de mémorisation de l'autre support de mémorisation, comprenant:
des premiers moyens (24, 10) pour effectuer des comparaisons successives de données mémorisées dans lesdits emplacements correspondants desdits premier et second supports de mémorisation; et
des seconds moyens (10, 24) sensibles auxdites comparaisons pour exécuter une opération de gestion pour chacun desdits emplacements correspondants où lesdites comparaisons effectuées par lesdits premiers moyens ont indiqué que les données contenues dans lesdits emplacements correspondants n'étaient pas identiques, appareil dans lequel, pour exécuter ladite opération de gestion, lesdits seconds moyens comprennent :
a. des troisièmes moyens pour lire des données à partir d'emplacements dudit premier support de mémorisation et pour inscrire lesdites données dans lesdits emplacements correspondants dudit second support de mémorisation tout en maintenant un accès au moins audit premier support de mémorisation pour permettre l'exécution desdites opérations d'entrée/sortie de routine par le ou les processeurs centraux;
b. des quatrièmes moyens pour comparer les données contenues dans lesdits emplacements correspondants après ladite inscription par lesdits troisièmes moyens afin de déterminer si les données contenues dans lesdits emplacements correspondants sont identiques; et
c. des cinquièmes moyens pour renvoyer l'opération aux troisièmes moyens si les quatrièmes moyens indiquent que les données contenues dans lesdits emplacements correspondants ne sont pas identiques, sinon, pour finir ladite opération de gestion en ce qui concerne lesdits emplacements de mémorisation.

13. Appareil selon la revendication 12, dans lequel chacun desdits processeurs centraux va transmettre toutes les demandes d'écriture destinées auxdits supports de mémorisation, d'abord audit premier support de mémorisation, puis, une fois terminée ladite demande d'écriture dans ledit premier support de mémorisation, audit second support de mémorisation.

14. Appareil selon la revendication 12, dans lequel chacun desdits processeurs centraux conserve une table contenant des informations lui permettant de déterminer si ladite opération de gestion est exécutée sur l'un au moins desdits supports de mémorisation dudit double jeu.

15. Appareil selon la revendication 12, dans lequel chacun de plusieurs processeurs centraux peut accéder directement à chacun desdits supports de mémorisation.

16. Appareil selon la revendication 12, dans lequel lesdits moyens pour exécuter ladite opération de gestion répètent ladite lecture et ladite comparaison de manière récursive pour les mêmes emplacements correspondants jusqu'à ce qu'il soit déterminé que les données mémorisées dans lesdits emplacements correspondants sont identiques.
